Europäisches Patentamt

European Patent Office

Office européen des brevets

(19)

(11) EP 0 810 974 B1

(12) FASCICULE DE BREVET EUROPEEN

(45) Date de publication et mention
de la délivrance du brevet:
**04.08.1999 Bulletin 1999/31**

(21) Numéro de dépôt: 96904163.1

(22) Date de dépôt: 20.02.1996

(51) Int Cl.⁶: **C01B 17/04**

(86) Numéro de dépôt international:
**PCT/FR96/00266**

(87) Numéro de publication internationale:
**WO 96/26157 (29.08.1996 Gazette 1996/39)**

(54) **PROCEDE D'OXYDATION PARTIELLE D'UN FLUX DE GAZ COMPRENANT DU SULFURE D'HYDROGENE**

VERFAHREN ZUR TEILOXIDATION EINES SCHWEFELWASSERSTOFF ENTHALTENDEN GASSTROMS

METHOD FOR PARTIALLY OXIDISING A GAS STREAM CONTAINING HYDROGEN SULPHIDE

(84) Etats contractants désignés:
**AT BE CH DE DK ES FR GB GR IE IT LI NL PT SE**

(30) Priorité: **21.02.1995 FR 9501989**

(43) Date de publication de la demande:
**10.12.1997 Bulletin 1997/50**

(73) Titulaire: **L'AIR LIQUIDE, SOCIETE ANONYME POUR
L'ETUDE ET L'EXPLOITATION DES PROCEDES
GEORGES CLAUDE
75321 Paris Cédex 07 (FR)**

(72) Inventeurs:
• **DJAVDAN, Ebrahim**
**F-75014 Paris (FR)**
• **KOENIG, Jacques**
**F-78000 Versailles (FR)**

• **NICOLAS, Jean-François**
**F-92350 Le Plessis Robinson (FR)**
• **QUEUDOT, Vincent**
**F-54200 Toul (FR)**
• **CHARON, Olivier**
**F-75016 Paris (FR)**

(74) Mandataire: **Vesin, Jacques et al
L'AIR LIQUIDE, SOCIETE ANONYME
POUR L'ETUDE ET L'EXPLOITATION
DES PROCEDES GEORGES CLAUDE
75, quai d'Orsay
75321 Paris Cédex 07 (FR)**

(56) Documents cités:
**EP-A- 0 315 225          DE-C- 3 430 015
US-A- 3 860 697          US-A- 4 988 287**

## Description

La présente invention concerne un procédé d'oxydation partielle, dans un four Claus, d'un flux de gaz comprenant du sulfure d'hydrogène, par réaction avec un flux d'air, enrichi en oxygène.

Des flux gazeux riches en sulfure d'hydrogène sont des déchets produits par de nombreuses industries, notamment l'industrie du raffinage du pétrole et de la production de gaz naturel. Pour des raisons liées notamment à l'environnement, ces gaz riches en sulfure d'hydrogène ne peuvent être libérés tels quels dans l'atmosphère. Il est donc nécessaire de les traiter en vue de réduire notablement leur teneur en sulfure d'hydrogène. Un procédé bien connu pour traiter ces gaz riches en sulfure d'hydrogène est le procédé Claus.

Ce procédé comprend une partie thermique et une partie catalytique. Dans la partie thermique sont réalisées deux réactions principales. La première réaction consiste à faire réagir un tiers environ du sulfure d'hydrogène à traiter avec de l'oxygène pour produire de l'eau et du dioxyde de soufre selon la réaction suivante :

$$H_2S + 3/2O_2 \rightarrow H_2O + SO_2.$$

Les 2/3 restants de sulfure d'hydrogène à traiter sont mis à réagir avec le dioxyde de soufre formé au cours de la première étape ci-dessus, selon la réaction suivante :

$$SO_2 + 2H_2S \rightarrow 2H_2O + 3S.$$

La première réaction est habituellement réalisée avec l'oxygène de l'air. Afin d'augmenter la productivité de la partie thermique du procédé Claus, il a déjà été proposé de faire réagir lors de ladite première étape, le sulfure d'hydrogène avec de l'air enrichi en oxygène. Toutefois, il est généralement considéré que cet enrichissement de l'air en oxygène ne doit pas dépasser un certain seuil car sinon la chaleur de réaction est telle que la température aux parois du four Claus dépasse la température qui peut être supportée par les réfractaires constitutifs de ces parois. A cet égard, on peut se référer à la demande de brevet EP-A-165.609 qui décrit que si l'on fait réagir un flux de gaz comprenant 90 % molaire de sulfure d'hydrogène avec un flux de gaz à 40 % molaire d'oxygène, la température de flamme théorique, calculée dans les conditions adiabatiques devrait atteindre environ 1.732° C. Dans les mêmes conditions, mais avec un flux de gaz à 70 % molaire d'oxygène, il est indiqué que la température de la flamme devrait atteindre environ 2.065° C. Les réfractaires les plus performants sont décrits dans ce document comme ne pouvant résister à des températures supérieures à environ 1.537° C. Il a été considéré dans la demande de brevet EP-A-165.609 que le traitement d'un flux de gaz riche en sulfure d'hydrogène par un courant d'air enrichi en oxygène à 30-32 %, ne pouvait être réalisé dans un four Claus conventionnel, c'est-à-dire un four Claus dimensionné pour fonctionner avec de l'air non enrichi en oxygène. Il a alors été proposé un procédé selon lequel les effluents issus des réactions ayant eues lieu dans le four, sont refroidis. Après que le soufre formé lors desdites réactions a été condensé et extrait, une partie des effluents refroidis est recyclée dans la zone réactionnelle du four afin de diminuer la température de cette zone réactionnelle. Un tel procédé permet un traitement du sulfure d'hydrogène avec de l'air fortement enrichi en oxygène. Il a cependant pour inconvénient de nécessiter la mise en oeuvre d'un équipement de recyclage à ajouter à un four Claus conventionnel; ce procédé ne peut donc être réalisé au moyen d'un four Claus conventionnel.

Un autre procédé de traitement de gaz riche en sulfure d'hydrogène par un flux de gaz enrichi en oxygène a été décrit dans la demande de brevet EP-A-237.217. Ce procédé consiste à oxyder partiellement le sulfure d'hydrogène par de l'oxygène pur ou de l'air fortement enrichi en oxygène en deux étapes réalisées dans deux régions de combustion différentes séparées chacune par une zone de refroidissement. Ce procédé permet un étagement de la chaleur de réaction entre les deux régions. Il a cependant pour inconvénient de nécessiter l'adjonction d'un deuxième four Claus, ce qui résulte en un investissement important. Ce procédé ne peut donc être, lui non plus, mis en oeuvre au moyen d'un four Claus conventionnel.

Il est également connu de EP-A-315 225, d'injecter dans un brûleur de four Claus, du centre vers l'extérieur, de l'oxygène, du sulfure d'hydrogène et de l'air. La vitesse d'injection d'oxygène est comprise entre 50 et 250 m/s tandis que le sulfure d'hydrogène est injecté à une vitesse comprise entre 10 et 30 m/s, ce qui représente un rapport de vitesses oxygène/sulfure d'hydrogène compris entre 25 et 1,7.

La présente invention concerne un procédé d'oxydation partielle d'un gaz comprenant du sulfure d'hydrogène avec un flux de gaz enrichi en oxygène pouvant être réalisé dans un four Claus conventionnel. Ce procédé ne nécessite donc pas l'adjonction d'un deuxième four Claus, ni ne requiert l'injection d'effluents de réaction refroidis et recyclés en vue de diminuer la température du milieu réactionnel.

La présente invention a donc pour objet un procédé d'oxydation partielle d'au moins un flux de gaz comprenant du sulfure d'hydrogène dans un four Claus, caractérisé en ce qu'on met en oeuvre les étapes suivantes :

(a) on injecte dans le four Claus au moins un flux de gaz comprenant du sulfure d'hydrogène et au moins un flux d'air enrichi en oxygène, les vitesses d'injection de chacun de ces flux étant sensiblement parallèles,

(b) on contrôle la vitesse d'injection du flux d'air enrichi en oxygène et la vitesse d'injection du flux de gaz comprenant du sulfure d'hydrogène, de sorte que le rapport entre lesdites vitesses soit compris entre 0,8 et 1,2,

(c) on fait réagir l'oxygène du flux d'air enrichi en oxygène avec le sulfure d'hydrogène,

(d) on obtient un flux gazeux appauvri en sulfure d'hydrogène à la sortie du four Claus. Ce flux gazeux ainsi obtenu est enrichi en soufre.

De préférence, on injectera de l'oxygène au centre, entouré d'un courant d'air enrichi en oxygène, lui-même entouré d'un courant de sulfure d'hydrogène. De préférence également, lorsque seuls deux courants gazeux sont injectés dans le four, on injecte coaxialement l'air enrichi en oxygène (ou l'oxygène pur) au centre et le sulfure d'hydrogène en périphérie. Par air enrichi en oxygène, on entend un air comportant plus de 21 % molaire d'oxygène, de préférence supérieure à 25 % molaire, et très préférablement compris entre 40 % et 100 % molaire.

L'invention est décrite au regard de la description détaillée ci-dessous et des figures.

La figure 1 représente une coupe transversale d'un brûleur bi-tubes pour la mise en oeuvre d'un mode de réalisation du procédé de l'invention.

La figure 2 représente une coupe transversale d'un brûleur à trois tubes concentriques pour la mise en oeuvre d'un autre mode de réalisation du procédé de l'invention.

La figure 3 représente une coupe transversale d'un brûleur à quatre tubes concentriques pour la mise en oeuvre d'encore un autre mode de réalisation du procédé de l'invention.

La figure 4 représente les températures aux parois d'un four Claus, lors de l'oxydation partielle d'un flux de gaz acide par un flux d'oxygène pur.

La figure 5 représente les températures aux parois d'un four Claus, lors de l'oxydation partielle d'un flux de gaz acide et d'un flux de gaz ammoniaqué, par un flux d'oxygène pur.

La figure 6 représente des courbes comparatives de températures dans le cadre de l'exemple 3.

Il a été constaté par la Demanderesse que la mise en oeuvre du procédé de l'invention permettait, d'une manière surprenante, l'oxydation partielle du sulfure d'hydrogène contenu dans un flux de gaz par un flux d'air enrichi en oxygène, voire très enrichi en oxygène, ce dans un four Claus conventionnel. En effet, la seule modification du four Claus conventionnel requise en vue de la mise en oeuvre du procédé de l'invention, consiste en une simple adaptation des brûleurs et/ou des injecteurs pour l'injection des différents flux, de sorte à autoriser un fonctionnement avec l'air enrichi en oxygène. Ces brûleurs et/ou injecteurs sont généralement disposés en fond de four. Toutefois, aucune modification n'est requise pour ce qui concerne, notamment, les dimensions et la structure du four Claus luimême. De manière inattendue, et contrairement à ce que laissait présager l'art antérieur, la mise en oeuvre du procédé de l'invention permet l'obtention de températures aux parois du four, inférieures aux températures pouvant être supportées par les réfractaires constituant lesdites parois, ce même lorsque le four Claus est du type conventionnel.

Le rapport entre les vitesses d'injection dans le four Claus du flux de gaz comprenant le sulfure d'hydrogène et la vitesse d'injection du flux d'air enrichi en oxygène est habituellement compris entre 0,8 et 1,2. En effet, une des caractéristiques de l'invention est de réaliser des impulsions voisines au débouché du brûleur, c'est-à-dire, compte-tenu des masses volumiques des gaz concernés, des vitesses voisines d'injection de comburant et de carburant, de manière à freiner et répartir sur un trajet plus long, la turbulence créée par cisaillement entre les gaz acides ($H_2S$, etc ...) et l'air enrichi éventuellement en oxygène (Air + $O_2$ ou $O_2$ pur). Plus la turbulence est rapidement obtenue et concentrée localement, plus les réactions d'oxydations seront facilitées, et plus le « noyau chaud » sera concentré et près du brûleur, et transférera de la chaleur au nez du brûleur et aux parois de réfractaires en tête de four. Inversement, si la turbulence n'est pas rapidement réalisée ni concentrée localement, selon l'invention, les réactions d'oxydation ne sont pas facilitées : le nez du brûleur est moins chaud et moins de chaleur est transférée aux parois réfractaires du four (ce qui permet d'utiliser des réfractaires moins chers). Le terme vitesses parallèles signifie, dans le cadre de la présente invention, que l'angle formé par les vecteurs vitesse de chacun desdits flux, pris à leur débouché immédiat des brûleurs et/ou des injecteurs, est inférieur à environ 15°.

Ledit flux d'air peut être enrichi en oxygène en une teneur supérieure à 25 % molaire, de préférence en une teneur comprise entre 40 et 100 % molaire. La teneur en oxygène en laquelle ledit air est enrichi en oxygène, correspond à la fraction molaire en oxygène dudit gaz enrichi. A titre d'exemple, de l'air enrichi en oxygène à 50%, consiste en un mélange gazeux comprenant 50% molaire d'oxygène. Le cas échéant, l'air peut être enrichi à 100% en oxygène, auquel cas il consiste en de l'oxygène pur.

La concentration en sulfure d'hydrogène dans ledit flux de gaz peut être supérieure ou égale à 10 % molaire, plus généralement comprise entre 40 et 99 % molaire.

Le flux de gaz comprenant du sulfure d'hydrogène peut consister en un flux de gaz acide ou un flux de gaz ammoniaqué.

Un gaz acide est essentiellement constitué de sulfure d'hydrogène et de l'un au moins des composés suivants: vapeur d'eau, gaz carbonique, hydrocarbures et autres composés sulfurés. La teneur en sulfure d'hydrogène du gaz acide peut être comprise entre 60 et 95

%.

Un gaz ammoniaqué est habituellement constitué de 10 à 60 % molaire de vapeur d'eau, de 10 à 60 % molaire de sulfure d'hydrogène et de 10 à 60 % molaire d'ammoniac.

Le flux de gaz comprenant le sulfure d'hydrogène et le flux d'air enrichi en oxygène sont injectés dans le four de manière telle que lesdits flux entrent en contact et autorisent la réaction d'oxydation partielle du sulfure d'hydrogène avec l'oxygène. A cette fin, lesdits flux sont injectés à proximité l'un de l'autre.

De préférence, lorsque le flux de gaz comprenant le sulfure d'hydrogène est un flux de gaz acide, on procède de sorte à ce qu'une partie au moins dudit flux de gaz acide entoure le flux de gaz enrichi en oxygène. La configuration selon l'invention comporte toujours de préférence le gaz réducteur à l'extérieur (gaz acide) : cette disposition diminue la surface de contact du gaz acide avec l'oxydant puisque le gaz acide "recouvre" l'oxygène et/ou l'air, contrairement à l'art antérieur dans lequel le gaz acide est, d'un côté en contact avec l'oxygène, et de l'autre, avec l'air. Cependant, dans le cas où du gaz ammoniac doit être détruit (NH$_3$ est également un gaz réducteur), on injectera de préférence l'ammoniac au centre, de manière à l'oxyder complètement et le détruire ainsi complètement, alors que le sulfure d'hydrogène ne doit être que partiellement détruit.

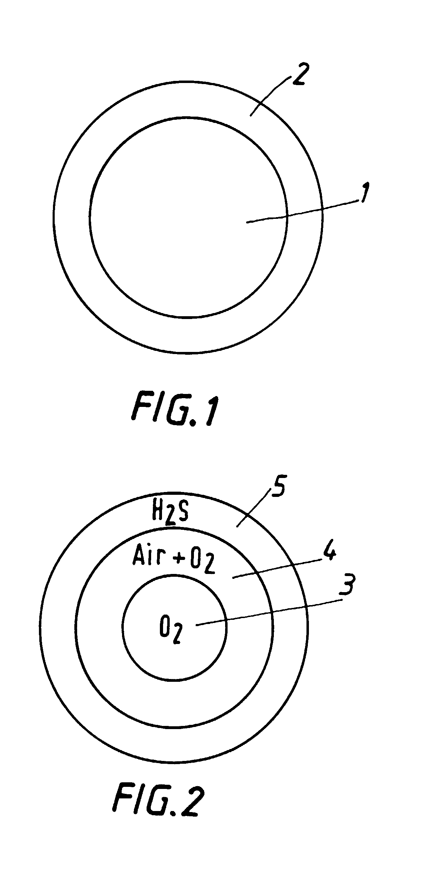

Les différents flux peuvent être injectés au moyen d'un brûleur comprenant des tubes concentriques. Un tel brûleur est représenté en coupe transversale à la figure 1, où le tube 1 permet l'injection d'un flux d'air enrichi en oxygène et le tube 2 permet l'injection du flux de gaz comprenant le sulfure d'hydrogène. Un tel brûleur est plus particulièrement adapté à l'oxydation partielle d'un flux de gaz acide.

Selon un autre aspect de l'invention, le flux d'air enrichi en oxygène peut être composé de deux flux distincts, les vitesses d'injection de chacun de ces flux étant sensiblement parallèles ; la teneur en oxygène de chacun de ces flux étant sensiblement différente. Ainsi l'un de ces flux peut être constitué d'oxygène pur, l'autre flux étant un flux d'air ou un flux d'air enrichi à 25-100% en oxygène. Avantageusement, ledit flux d'air ou ledit flux d'air enrichi en oxygène entoure le flux d'oxygène pur. Généralement, le flux de gaz comprenant le sulfure d'hydrogène entoure ledit flux d'air ou ledit flux d'air enrichi en oxygène. L'injection dans le four Claus de ces différents flux peut être réalisée au moyen d'un brûleur multi-tubes concentriques. Un tel brûleur est représenté en coupe transversale à la figure 2 où le tube central 3 permet l'injection d'oxygène, le tube intermédiaire 4 permet l'injection du flux d'air ou du flux d'air enrichi en oxygène, et le tube extérieur 5 permet l'injection du flux de gaz comprenant le sulfure d'hydrogène.

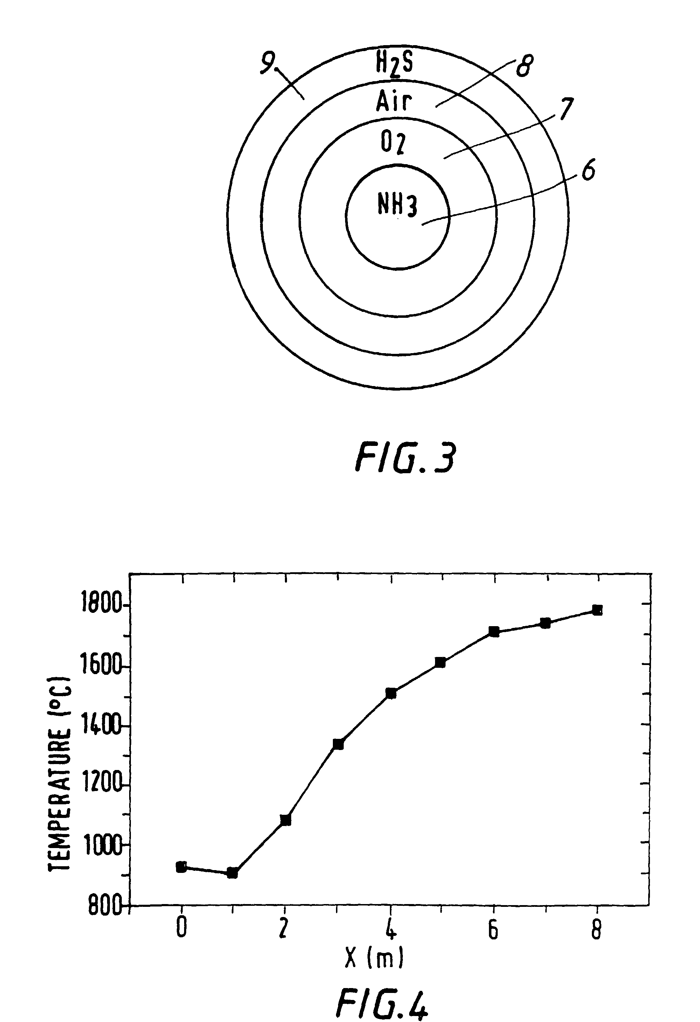

Selon un autre aspect de l'invention, lorsque le flux de gaz enrichi en oxygène se compose, comme indiqué plus haut, de deux flux distincts ayant des teneurs en oxygène différant sensiblement, on procède de sorte à ce que le flux de gaz ammoniaqué soit entouré par le flux de gaz le plus fortement enrichi en oxygène, ce dernier étant lui-même entouré par le flux de gaz le moins enrichi en oxygène. De préférence, ledit flux de gaz le plus fortement enrichi en oxygène consiste en de l'oxygène pur et le flux le moins enrichi en oxygène est de l'air. L'injection de ces différents flux peut être réalisée au moyen d'un brûleur multi-tubes tel celui représenté en coupe transversale à la figure 3, où le tube central 6 permet l'injection du gaz ammoniaqué, le premier tube intermédiaire 7 permet l'injection d'un flux d'oxygène pur, le second tube intermédiaire 8 permet l'injection du flux de gaz enrichi en oxygène et le tube extérieur 9 permet l'injection d'un flux de gaz acide.

Selon encore un autre aspect, le procédé de l'invention peut être mis en oeuvre au moyen de plusieurs, par exemple deux ou trois, des brûleurs décrits ci-dessus, disposés en parallèle. Ainsi, lorsqu'on veut procéder à l'oxydation d'un flux de gaz acide et d'un flux de gaz ammoniaqué, on peut utiliser deux brûleurs selon la figure 1. Dans le premier de ces brûleurs, on injecte le gaz acide par le tube 2 et le gaz enrichi en oxygène par le tube 1. Dans le deuxième brûleur, on injecte le gaz ammoniaqué par le tube 1 et le gaz enrichi en oxygène par le tube 2.

Généralement, le flux de gaz obtenu en sortie de four présent une température supérieure à 1.000° C., de préférence comprise entre 1.300° C. et 2.000° C.

Quel que soit le mode de réalisation du procédé de l'invention, les brûleurs mis en oeuvre présentent généralement, pour chacun de leur tube, une section de surface prédéterminée.

Cette surface doit être telle que, en fonction des débits en chacun desdits flux et de l'enrichissement en oxygène choisi, les rapports de vitesses entre, d'une part, le ou les flux de gaz enrichi en oxygène et, d'autre part, le ou les flux de gaz comprenant le sulfure d'hydrogène soient compris entre 4/1 et 1/4; étant entendu que les flux contigus doivent présenter entre eux des rapports de vitesses compris entre 0,8 et 1,2.

Les débits desdits flux sont imposés par l'installation dans laquelle est réalisé le procédé de l'invention. Plus particulièrement, les débits sont notamment dépendants des dimensions du four Claus et des caractéristiques de l'échangeur thermique disposé à la sortie dudit four Claus.

En fonction de ces paramètres, l'homme du métier est parfaitement à même de déterminer lesdites surfaces.

Selon un aspect particulièrement avantageux de l'invention, tous les flux de gaz mis en oeuvre, sont injectés dans le four Claus de manière coaxiale.

Le procédé selon l'invention peut être réalisé dans un seul four Claus, c'est-à-dire qu'il ne nécessite pas la mise en oeuvre de deux fours Claus disposés en série. Plus particulièrement, il peut être mis en oeuvre dans un four Claus conventionnel, c'est-à-dire un four Claus dimensionné pour fonctionner jusqu'alors avec une oxydation partielle du sulfure d'hydrogène réalisée uniquement avec de l'air non enrichi en oxygène; et cela sans recycle d'effluents de réaction refroidis.

L'invention sera mieux comprise au regard des exemples qui suivent :

EXEMPLE 1:

Dans un four Claus conventionnel, équipé d'un brûleur tel celui représenté à la figure 1, on injecte des flux d'air enrichi à différents taux en oxygène et un flux de gaz acide constitué de 91 % de sulfure d'hydrogène et de 9 % de vapeur d'eau. La longueur du four Claus est de 8 m, son diamètre intérieur de 1,5 m et son diamètre extérieur de 2 m.

Le tube 1 dudit brûleur permet l'injection d'oxygène pur. Le tube 1 a un diamètre de 0.22 m. Le tube 2 permet l'injection du flux de gaz acide. Son diamètre est de 0.4m. Ces deux tubes sont coaxiaux et autorisent donc l'injection de chacun desdits flux avec des vitesses parallèles.

La vitesse d'injection du flux de gaz acide est de 36 m/s.

La vitesse d'injection du flux d'oxygène pur est également de 36 m/s.

Les parois du four comprennent des réfractaires comportant 99 % d'alumine pouvant supporter une température de 1.800° C. De tels réfractaires sont commercialisés par la société Savoie Réfractaires, sous la référence AL 100, et par la société Didier Werke, sous la référence Durital K 99.

On détermine les températures aux parois sur toute la longueur du four. Les résultats obtenus sont représentés dans la figure 4 où X représente la longueur (en m) du four. Ces résultats montrent que la réaction d'oxydation d'un flux de gaz acide riche en sulfure d'hydrogène, par un flux d'oxygène pur, quand elle est réalisée dans les conditions de l'invention, peut être réalisé dans un seul four Claus conventionnel, sans recycle d'effluents de réaction refroidis, tout en maintenant des températures acceptables par les réfractaires, sur toute la longueur du four.

EXEMPLE 2 :

On met en oeuvre un four Claus identique à celui de l'exemple 1, mais équipé d'un brûleur tel que représenté à la figure 2, pour réaliser l'oxydation partielle d'un flux de gaz acide et d'un flux de gaz ammoniaqué par un flux d'oxygène pur.

Le flux de gaz acide est constitué de 90 % molaire de sulfure d'hydrogène et de 10 % molaire de vapeur d'eau. Ce flux est injecté par le tube 5, à une vitesse au débouché du tube de 40 m/s.

Le flux de gaz ammoniaqué est constitué par 20 % molaire de sulfure d'hydrogène, 50 % molaire de vapeur d'eau et 30 % molaire d'ammoniac. Ce flux est injecté par le tube 3, avec une vitesse au débouché du tube de 40 m/s.

Le flux d'oxygène pur est injecté par le tube 4, avec une vitesse au débouché de ce tube, de 49 m/s.

Les diamètres des tubes 3, 4 et 5 sont respectivement, de 0,1 m, 0,22 m et 0,40 m.

On détermine les températures aux parois sur toute la longueur du four.

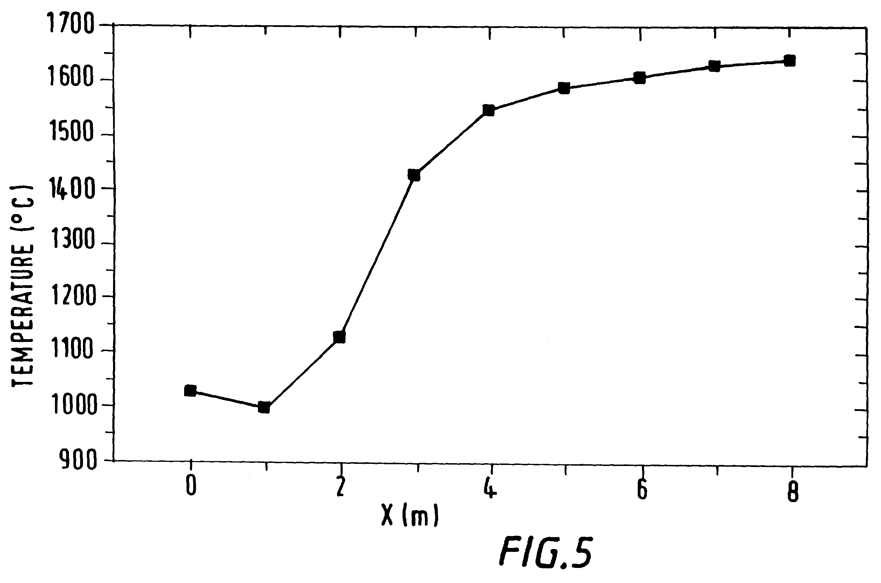

Les résultats obtenus sont représentés à la figure 5 où X représente la longueur du four (en m).

Ces résultats montrent que l'oxydation d'un flux de gaz acide riche en sulfure d'hydrogène et d'un flux de gaz ammoniaqué par un flux d'oxygène pur, peut être réalisée dans un four Claus conventionnel, tout en maintenant des températures acceptables par les réfractaires, et ce, sur toute la longueur du four.

EXEMPLE 3:

En utilisant quatre configurations différentes d'injection explicitées ci-dessous (cas n° 1 à 4) dans le même four, avec des injections de gaz acide, d'air et d'oxygène (50 % molaire de $O_2$ présent dans la somme des deux flux d'air et d'oxygène), on illustre l'un des avantages obtenus grâce à l'invention, c'est-à-dire l'abaissement de la température des réfractaires à proximité du brûleur. Les différentes courbes de température obtenues avec les quatre cas suivants sont représentées avec des numéros respectifs de 1 à 4.

Cas n° 1 :

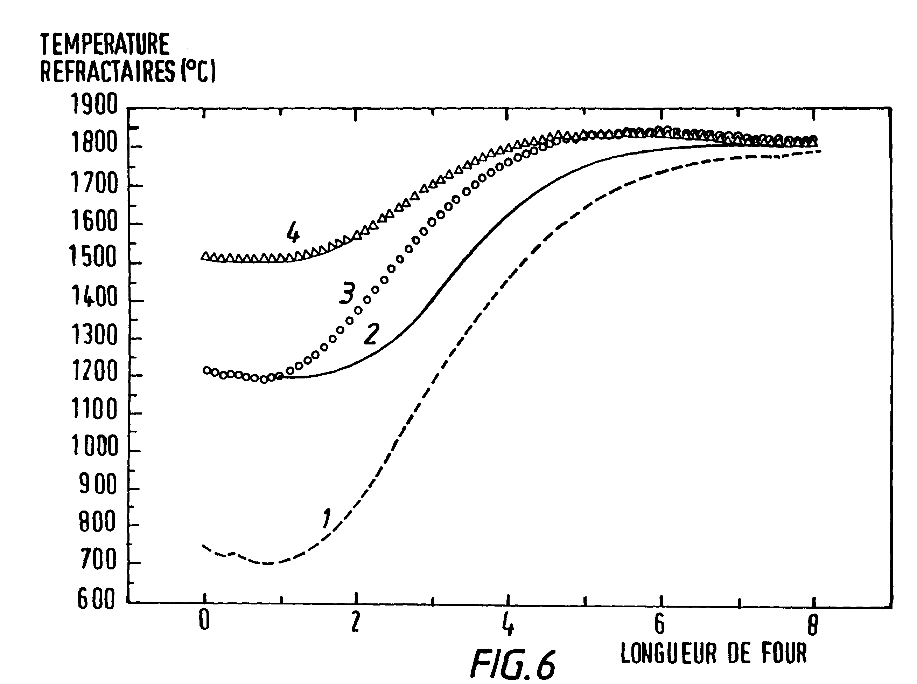

On utilise la configuration décrite sur la figure 2. Le tube central (injection d'oxygène) a un diamètre de 16,7 cm et la vitesse d'injection d'oxygène est de 30 m/s. Ce tube central est entouré d'un second tube, disposé coaxialement de diamètre 27,6 cm, dans lequel de l'air est injecté à 30 m/s. Un tube périphérique de 42,4 cm est disposé coaxialement aux deux premiers, dans lequel est injecté à 30 m/s le gaz acide (sulfure d'hydrogène). Les résultats sont représentés par la courbe 1 sur la figure 6.

Cas n° 2 :

On utilise une configuration comportant l'oxygène au centre, puis le gaz acide, puis l'air injecté dans le tube extérieur, toutes choses égales par ailleurs avec le cas n° 1 mais avec des diamètres respectivement de 16,7 cm, 36,2 cm et 42,4 cm (oxygène, gaz acide, air respectivement), (mêmes vitesses). Les résultats sont représentés sur la courbe 2 sur la figure 6 : la température des réfractaires au niveau du brûleur est bien plus élevée que dans le cas n° 1 (environ 1.200°C au lieu de 700°C), les températures devenant sensiblement égales à 8 mètres environ du brûleur.

Cas n° 3 :

On utilise une configuration similaire à celle de l'exemple 1, à l'exception du tube intérieur de diamètre 7,4 cm avec une vitesse d'injection de l'oxygène dans ce tube de 150 m/s (au lieu de 30 m/s), un tube concentrique de diamètre 23,2 cm (air à vitesse de 30 m/s) et un tube concentrique extérieur de diamètre 39,6 cm (gaz acide à une vitesse de 30 m/s). Les résultats obtenus sont représentés sur la courbe n° 3. Les résultats obtenus sont encore moins bons que dans le cas n° 2 car la température des réfractaires augmente plus rapidement en fonction de la distance (ce qui indique clairement une combustion plus rapide du fait de la turbulence importante créée par la différence des vitesses également alors que dans la structure de l'invention, les vitesses sensiblement voisines provoquent une combustion retardée ou étagée.

Cas n° 4 :

Toutes choses égales par ailleurs au cas n° 1, le brûleur Claus comporte un tube intérieur de diamètre 7,4 cm dans lequel circule de l'oxygène à 150 m/s, un second tube de 33 cm de diamètre disposé coaxialement et dans lequel circule le gaz acide (vitesse 30 m/s) et un tube extérieur de 39,6 cm de diamètre (vitesse 30 m/s) d'injection d'air. Les résultats sont représentés sur la courbe 4. Ils sont représentatifs de la technique de l'art antérieur, telle que décrite, par exemple dans EP-A-315 225. La température au voisinage du brûleur passe du simple (700°C - courbe 1) à plus du double (1.500°C - courbe 4).

EXEMPLE 4:

[0056] * La configuration testée est celle de la figure 3, c'est-à-dire la même disposition que sur la figure 2 en ce qui concerne les tubes concentriques injectant respectivement $O_2$/Air/Gaz acide, mais on dispose un tube injectant du gaz ammoniaqué à détruire au centre.

Ceci est réalisé en vue de détruire le $NH_3$ préférentiellement par oxydation au contact de l'oxygène, ce qui est une réaction rapide et complète, plutôt que par dissociation thermique qui est une réaction lente et incomplète et qui serait mise en oeuvre si le gaz ammoniaqué était injecté par exemple en pré-mélange avec le gaz acide.

De la même manière que dans le cas n° 1 de l'exemple 3, les vitesses d'injection sont voisines.

Dans les 2 cas qui suivent, le débit de $NH_3$ injecté est tel que la composition équivalente de flux de gaz acide et de gaz ammoniaqué est de 70% $H_2S$, 7% $H_2O$, 23% $NH_3$; d'autre part, le débit de $O_2$ pur injecté est tel que $O_2$ dans flux ($O_2$ + Air) est de 50% molaire.

Cas n° 1 :

. Diamètre tube 6 ($NH_3$) de 17,6 cm, vitesse 30 m/s
7 ($O_2$) de 24,3 cm, vitesse 30 m/s
8 (Air) de 32,8 cm, vitesse 30 m/s
9 (GA) de 42,4 cm, vitesse 30 m/s

Après analyse, on constate que la teneur en NH3 au bout de 6 m est sensiblement nulle sur toute la section droite du four.

Cas n° 2 :

On part de la configuration de la fig. 2, mais on injecte dans le tube 5, le gaz ammoniaqué en plus du gaz acide.

. Diamètre tube 3 ($O_2$) de 16,7 cm, vitesse 30 m/s
4 (Air) de 27,6 cm, vitesse 30 m/s
5 (Gaz Acide + Gaz Ammoniaqué)
42,4 cm, vitesse 30 m/s

La teneur en $NH_3$ au bout de 8 m, varie entre 5% près des parois du four, à 0,5% sur l'axe du four.

Ce cas n° 2 correspond à une configuration qui pourrait se déduire de manière évidente de l'art antérieur (bien qu'elle n'y soit pas décrite).

Ainsi, l'invention (cas n° 1) apporte là encore, un avantage inattendu.

**Revendications**

1. Procédé d'oxydation partielle dans un four Claus d'au moins un flux de gaz comprenant du sulfure d'hydrogène, caractérisé en ce qu'on met en oeuvre les étapes suivantes :

    (a) on injecte dans le four Claus au moins un flux de gaz comprenant du sulfure d'hydrogène et au moins un flux d'air enrichi en oxygène, les vitesses d'injection de chacun de ces flux étant sensiblement parallèles,
    (b) on contrôle la vitesse d'injection du flux de gaz comprenant du sulfure d'hydrogène et la vitesse d'injection du flux d'air enrichi en oxygène, de sorte que le rapport entre lesdites vitesses soit compris entre 0,8 et 1,2,
    (c) on fait réagir l'oxygène du flux d'air enrichi en oxygène avec le sulfure d'hydrogène,
    (d) on obtient un flux gazeux appauvri en sulfure d'hydrogène et enrichi en soufre à la sortie du four Claus.

2. Procédé selon la revendication 1, caractérisé en ce que l'air est enrichi en oxygène en une teneur supérieure à 25 % molaire, de préférence en une teneur comprise entre 40 et 100 % molaire.

3. Procédé selon l'une des revendications 1 à 2, caractérisé en ce que la concentration en sulfure d'hydrogène dans ledit flux de gaz comprenant le sulfure d'hydrogène est supérieure ou égale à 10 % molaire, plus généralement comprise entre 40 et 99 % molaire.

4. Procédé selon l'une des revendications 1 à 3, caractérisé en ce que le flux d'air enrichi en oxygène se compose de deux flux distincts, les vitesses d'injection de chacun de ces flux étant sensiblement parallèles et la teneur en oxygène de chacun de ces flux étant sensiblement différente.

5. Procédé selon la revendication 4, caractérisé en ce que le flux d'air enrichi en oxygène se compose d'un flux d'oxygène pur entouré par un flux d'air.

6. Procédé selon l'une des revendications 1 à 5, caractérisé en ce que le flux de gaz comprenant le sulfure d'hydrogène est un flux de gaz acide.

7. Procédé selon l'une des revendications 1 à 6, caractérisé en ce qu'on réalise l'injection d'une partie au moins du flux de gaz comprenant le sulfure d'hydrogène, notamment un flux de gaz acide, de sorte qu'une partie au moins de ce flux entoure le flux d'air enrichi en oxygène.

8. Procédé selon l'une des revendications 1 à 7, caractérisé en ce que le flux de gaz comprenant le sulfure d'hydrogène est un flux de gaz ammoniaqué.

9. Procédé selon l'une des revendications 1 à 7, caractérisé en ce qu'on fait réagir avec le flux d'air enrichi en oxygène, un flux de gaz ammoniaqué et un flux de gaz acide.

10. Procédé selon l'une des revendications 7 à 9, caractérisé en ce que le flux de gaz ammoniaqué est entouré par une partie au moins du flux d'air enrichi en oxygène.

11. Procédé selon la revendication 10, caractérisé en ce que le flux de gaz ammoniaqué est entouré par un flux d'oxygène pur.

12. Procédé selon l'une des revendications 1 à 11, caractérisé en ce que les flux injectés dans le four Claus sont coaxiaux

13. Procédé selon l'une des revendications 1 à 12, caractérisé en ce qu'on met en oeuvre un seul four Claus, sans recycle d'effluents de réaction refroidis.

14. Procédé selon l'une des revendications 1 à 13, caractérisé en ce que ledit four Claus mis en oeuvre était préalablement adapté pour l'oxydation d'un flux de gaz comprenant le sulfure d'hydrogène par réaction avec un flux d'air non enrichi en oxygène.

15. Procédé selon l'une des revendications à 14, caractérisé en ce que le flux de gaz obtenu en sortie du four Claus présentent une température supérieure à 1.000° C, de préférence comprise entre 1.300° C. et 2.000° C.

**Patentansprüche**

1. Verfahren zur teilweisen Oxidation in einem CLAUS-Ofen mindestens eines schwefelwasserstoffhaltigen Gasstroms, dadurch gekennzeichnet, daß man folgende Schritte durchführt:

(a) man injiziert in den CLAUS-Ofen mindestens einen schwefelwasserstoffhaltigen Gasstrom und mindestens einen sauerstoffangereicherten Luftstrom, wobei die Injektionsgeschwindigkeiten jedes dieser Ströme im wesentlichen parallel verlaufen,
(b) man reguliert die Injektionsgeschwindigkeit des schwefelwasserstoffhaltigen Gasstroms und die Injektionsgeschwindigkeit des sauerstoffangereicherten Luftstroms derart, daß das Verhältnis dieser Geschwindigkeiten zwischen 0,8 und 1,2 liegt,
(c) man setzt den Sauerstoff des sauerstoffangereicherten Luftstroms mit dem Schwefelwasserstoff um und
(d) erhält am Ausgang des CLAUS-Ofens einen schwefelwasserstoffverarmten und schwefelangereicherten Gasstrom.

2. Verfahren nach Anspruch 1, dadurch gekennzeichnet, daß die Luft mit einem Sauerstoffgehalt von mehr als 25 Mol-%, vorzugsweise zwischen 40 und 100 Mol-% angereichert ist.

3. Verfahren nach Anspruch 1 oder 2, dadurch gekennzeichnet, daß die Schwefelwasserstoffkonzentration im schwefelwasserstoffhaltigen Gasstrom 10 Mol-% oder mehr beträgt, insbesondere zwischen 40 und 99 Mol-% liegt.

4. Verfahren nach einem der Ansprüche 1 bis 3, dadurch gekennzeichnet, daß sich der sauerstoffangereicherte Luftstrom aus zwei verschiedenen Strömen zusammensetzt, wobei die Injektionsgeschwindigkeiten jedes dieser Ströme im wesentlichen parallel verlaufen und der Sauerstoffgehalt jedes dieser Ströme im wesentlichen verschieden ist.

**5.** Verfahren nach Anspruch 4, dadurch gekennzeichnet, daß sich der sauerstoffangereicherte Luftstrom aus einem Strom aus Reinsauerstoff und einem diesen umfließenden Luftstrom zusammensetzt.

**6.** Verfahren nach einem der Ansprüche 1 bis 5, dadurch gekennzeichnet, daß der schwefelwasserstoffhaltige Gasstrom ein saurer Gasstrom ist.

**7.** Verfahren nach einem der Ansprüche 1 bis 6, dadurch gekennzeichnet, daß man die Injizierung mindestens eines Teils des schwefelwasserstoffhaltigen Gasstroms, insbesondere eines sauren Gasstroms, derart durchführt, daß mindestens ein Teil dieses Stroms den sauerstoffangereicherten Luftstrom umfließt.

**8.** Verfahren nach einem der Ansprüche 1 bis 7, dadurch gekennzeichnet, daß der schwefelwasserstoffhaltige Gasstrom ein ammoniakhaltiger Gasstrom ist.

**9.** Verfahren nach einem der Ansprüche 1 bis 7, dadurch gekennzeichnet, daß man einen ammoniakhaltigen Gasstrom und einen sauren Gasstrom mit dem sauerstoffangereicherten Luftstrom umsetzt.

**10.** Verfahren nach einem der Ansprüche 7 bis 9, dadurch gekennzeichnet, daß man den ammoniakhaltigen Gasstrom mindestens teilweise von einem sauerstoffangereicherten Luftstrom umfließen läßt.

**11.** Verfahren nach Anspruch 10, dadurch gekennzeichnet, daß man den ammoniakhaltigen Gasstrom von einem Strom aus Reinsauerstoff umfließen läßt.

**12.** Verfahren nach einem der Ansprüche 1 bis 11, dadurch gekennzeichnet, daß die in den CLAUS-Ofen injizierten Ströme koaxial sind.

**13.** Verfahren nach einem der Ansprüche 1 bis 12, dadurch gekennzeichnet, daß man nur einen CLAUS-Ofen ohne Rückführung der gekühlten Reaktionsabgase einsetzt.

**14.** Verfahren nach einem der Ansprüche 1 bis 13, dadurch gekennzeichnet, daß der eingesetzte CLAUS-Ofen zuvor auf die Oxidation eines schwefelwasserstoffhaltigen Gasstroms durch Umsetzung mit einem nicht sauerstoffangereicherten Luftstrom eingestellt wurde.

**15.** Verfahren nach einem der Ansprüche 1 bis 14, dadurch gekennzeichnet, daß der am Ausgang des CLAUS-Ofens erhaltene Gasstrom eine Temperatur von über 1000°C, vorzugsweise zwischen 1300°C und 2000°C aufweist.

**Claims**

**1.** Process for partial oxidation in a Claus furnace of at least one gas stream containing hydrogen sulphide, characterized in that the following stages are carried out:

(a) at least one gas stream containing hydrogen sulphide and at least one oxygen-enriched air stream are injected into the Claus furnace, the speeds of injection of each of these streams being substantially parallel,
(b) the speed of injection of the gas stream containing hydrogen sulphide and the speed of injection of the oxygen-enriched air stream are controlled such that the ratio of the said speeds is between 0.8 and 1.2,
(c) the oxygen in the oxygen-enriched air stream is reacted with the hydrogen sulphide,
(d) a gas stream depleted in hydrogen sulphide and enriched in sulphur is obtained at the exit of the Claus furnace.

**2.** Process according to Claim 1, characterized in that the air is enriched in oxygen to a content higher than 25 mol%, preferably to a content of between 40 and 100 mol%.

**3.** Process according to one of Claims 1 to 2, characterized in that the hydrogen sulphide concentration in the said gas stream containing hydrogen sulphide is higher than or equal to 10 mol%, more generally between 40 and 99 mol%.

**4.** Process according to one of Claims 1 to 3, characterized in that the oxygen-enriched air stream is composed of two distinct streams, the speeds of injection of each of these streams being substantially parallel and the oxygen content of each of these streams being substantially different.

**5.** Process according to Claim 4, characterized in that the oxygen-enriched air stream is composed of a stream of pure oxygen surrounded by a stream of air.

**6.** Process according to one of Claims 1 to 5, characterized in that the gas stream containing hydrogen sulphide is a sour gas stream.

**7.** Process according to one of Claims 1 to 6, characterized in that the injection of at least a portion of the gas stream containing hydrogen sulphide, especially a sour gas stream, is carried out so that at least a portion of this stream surrounds the oxygen-enriched air stream.

**8.** Process according to one of Claims 1 to 7, characterized in that the gas stream containing hydrogen sulphide is an ammonia-containing gas stream.

9. Process according to one of Claims 1 to 7, characterized in that an ammonia-containing gas stream and a sour gas stream are reacted with the oxygen-enriched air stream.

10. Process according to one of Claims 7 to 9, characterized in that the ammonia-containing gas stream is surrounded by at least a portion of the oxygen-enriched air stream.

11. Process according to Claim 10, characterized in that the ammonia-containing gas stream is surrounded by a stream of pure oxygen.

12. Process according to one of Claims 1 to 11, characterized in that the streams injected into the Claus furnace are coaxial.

13. Process according to one of Claims 1 to 12, characterized in that a single Claus furnace is used without recycling of cooled reaction effluents.

14. Process according to one of Claims 1 to 13, characterized in that the said Claus furnace used was previously adapted for the oxidation of a gas stream containing hydrogen sulphide by reaction with a stream of air not enriched in oxygen.

15. Process according to one of Claims 1 to 14, characterized in that the gas stream obtained at the exit of the Claus furnace is at a temperature higher than 1000°C, preferably between 1300°C and 2000°C.

FIG.1

FIG.2

*FIG.3*

*FIG.4*

FIG.5

FIG.6

TEMPERATURE REFRACTAIRES (°C)

LONGUEUR DE FOUR